# EUROPEAN PATENT APPLICATION

(11) **EP 4 451 608 A1**
(43) Date of publication of application: **23.10.2024**
(21) Application number: 24169298.7
(22) Date of filing: 09.04.2024
(51) Int. Cl.: H04L 9/30, H04L 9/00

(54) **LOW-ENTROPY MASKING FOR CRYPTOGRAPHY OVER RINGS OF POLYNOMIALS**

(30) Priority: 18.04.2023 US 202318135922
(71) Applicant: NXP B.V., 5656 AG Eindhoven (NL)
(72) Inventor: Renes, Joost Roland, 5656AG Eindhoven (NL); Fay, Björn, 5656AG Eindhoven (NL)
(74) Representative: Hardingham, Christopher Mark

(57) **Abstract**

System and method for masking secret polynomials for cryptography receives a secret polynomial function in a polynomial ring, which is masked with one or more masking polynomials in which at least some coefficients have a same value. An arithmetic operation is performed on coefficients of the masking polynomials with repeated coefficients to produce an output having integer values. A cryptographic operation is then performed with the output of the arithmetic operation.

## Description

### BACKGROUND

Recent significant advances in quantum computing have accelerated the research into post-quantum cryptography schemes for cryptographic algorithms, which run on classical computers but are believed to be still secure even when faced against an adversary with access to a quantum computer. This demand is driven by interest from standardization bodies, such as the call for proposals for new public-key cryptography standards by the National Institute of Standards and Technology (NIST).

There are various different families of problems to instantiate these post-quantum cryptographic approaches. Constructions based on the hardness of lattice problems are considered to be one of the most promising candidates to become the next standard. Most approaches considered within this family are a generalization of the Learning With Errors (LWE) framework, i.e., the Ring-Learning With Errors problem.

When implemented, the main computationally expensive operations are arithmetic with polynomials with integer coefficients. These computations are done in a ring ${R}_{q} = {F}_{q} \left[X\right] / \left({X}^{n}+1\right)$ or ${R}_{q} = {F}_{q} \left[X\right] / \left({X}^{n}-1\right)$ for positive integers *q* and *n*, where the coefficients of the polynomial are in ${F}_{q}$ while the polynomial arithmetic is modulo *Xⁿ* +1 or *Xⁿ* -1. The choice of *q* has significant impact on the computations because if *q* is prime, cryptosystems can rely on number theoretic transforms (NTTs), while if *q* is a power of two, the cryptosystems can apply normal polynomial multiplication methods. These computations are typically performed for generation of secret keys. Protecting against side-channel attacks on such secret keys involves *masking*, which linearly increases the cost of the multiplication or NTTs with the number of shares. Thus, there is a need to lower the cost per share.

### SUMMARY

System and method for masking secret polynomials for cryptography receives a secret polynomial function in a polynomial ring, which is masked with one or more masking polynomials in which at least some coefficients have a same value. An arithmetic operation is performed on coefficients of the masking polynomials with repeated coefficients to produce an output having integer values. A cryptographic operation is then performed with the output of the arithmetic operation.

In an embodiment, a computer-implemented method for masking secret polynomials for cryptography comprises receiving a secret polynomial function in a polynomial ring, masking the secret polynomial function with one or more masking polynomials in which at least some coefficients have a same value, performing an arithmetic operation on coefficients of the masking polynomials with repeated coefficients to produce an output having integer values, and performing a cryptographic operation with the output of the arithmetic operation.

In an embodiment, coefficients of a masked version of the secret polynomial function include *k* unique coefficients.

In an embodiment, the method further comprises generating *k* uniformly random coefficients *rᵢ* for the masked version of the secret polynomial function for each of the masking polynomials, where *k* is a positive integer and less than *n.*

In an embodiment, performing the arithmetic operation includes executing a Number Theoretic Transform (NTT) on the masking polynomials with the repeated coefficients in registers of a processor.

In an embodiment, the method further comprises computing *sⱼ* = ${\sum }_{i = 0}^{k - 1} {r}_{i} {ζ}_{j}^{i}$ for all *k* primitive 2*k*-th roots of unity *ζⱼ*.

In an embodiment, performing the arithmetic operation includes computing *sⱼ* **NTT**_{*n*/*k*}(1 + . . . + *X*^{*n*/*k*-1}) for all *j* = 0, . . . , *k -* 1.

In an embodiment, performing the arithmetic operation includes multiplying the masked version of the secret polynomial function and a second polynomial function.

In an embodiment, performing the arithmetic operation includes computing ${\sum }_{i = 0}^{n - 1} \left({r}_{\left(l-i\right) mod k}⋅{f}_{i}\right) - 2 {\sum }_{i = l + 1}^{n - 1} \left({r}_{\left(l-i\right) mod k}⋅{f}_{i}\right)$ to derive the product of the masked version of the secret polynomial function and the second polynomial function.

In an embodiment, the method further comprises generating coefficients of a masked version of a second secret polynomial function such that at least some of the coefficients of the masked version of the second secret polynomial function have a same value.

In an embodiment, the secret polynomial function is $f = {\sum }_{i = 0}^{n} {f}_{i} {X}^{i}$ in a ring *R_{q}* = *F_{q}*[*X*]/(*Xⁿ* + 1) or in a ring *R_{q}* = *F_{q}*[*X*]/(*Xⁿ* - 1).

In an embodiment, a non-transitory computer-readable storage medium containing program instructions for masking secret polynomials for cryptography, wherein execution of the program instructions by one or more processors of a computer causes the one or more processors to perform steps that comprise receiving a secret polynomial function in a polynomial ring, masking the secret polynomial function with one or more masking polynomials in which at least some coefficients have a same value, performing an arithmetic operation on coefficients of the masking polynomials with repeated coefficients to produce an output having integer values, and performing a cryptographic operation with the output of the arithmetic operation.

In an embodiment, coefficients of a masked version of the secret polynomial function include *k* unique coefficients.

In an embodiment, the steps further comprise generating *k* uniformly random coefficients *rᵢ* for the masked version of the secret polynomial function for each of the masking polynomials, where *k* is a positive integer and less than *n.*

In an embodiment, performing the arithmetic operation includes executing a Number Theoretic Transform (NTT) on the masking polynomials with the repeated coefficients in registers of a processor.

In an embodiment, the steps further comprise computing ${s}_{j} = {\sum }_{i = 0}^{k - 1} {r}_{i} {ζ}_{j}^{i}$ for all *k* primitive 2*k*-th roots of unity *ζⱼ*.

In an embodiment, performing the arithmetic operation includes multiplying the masked version of the secret polynomial function and a second polynomial function.

In an embodiment, the steps further comprise generating coefficients of a masked version of a second secret polynomial function such that at least some of the coefficients of the masked version of the second secret polynomial function have a same value.

In an embodiment, an electronic device for masking secret polynomials for cryptography comprises memory, and at least one processor, wherein the at least one processor is configured to receive a secret polynomial function in a polynomial ring, mask the secret polynomial function with one or more masking polynomials in which at least some coefficients have a same value, perform an arithmetic operation on coefficients of the masking polynomials with repeated coefficients to produce an output having integer values, and perform a cryptographic operation with the output of the arithmetic operation.

In an embodiment, the at least one processor is configured to execute a Number Theoretic Transform (NTT) on the masking polynomials with the repeated coefficients in registers of the processor.

In an embodiment, the at least one processor is configured to multiply the masked version of the secret polynomial function and a second polynomial function.

These and other aspects in accordance with embodiments will become apparent from the following detailed description, taken in conjunction with the accompanying drawings, illustrated by way of example of the principles of the embodiments.

### BRIEF DESCRIPTION OF THE DRAWINGS

Fig. 1 is a block diagram of an electronic device in which embodiments of the invention can be implemented.
Fig. 2 is a block diagram of a main processor that may be used in the electronic device shown in Fig. 1.
Fig. 3 is a block diagram of a coprocessor that may be used in the electronic device shown in Fig. 1.
Fig. 4 illustrates operations for performing log-entropy masking in accordance with an embodiment of the invention.
Fig. 5 is a flow diagram of a process for low-entropy masking secret polynomials for cryptography in accordance with an embodiment of the invention.
Fig. 6 is a process flow diagram of a computer-implemented method for masking secret polynomials for cryptography in accordance with an embodiment of the invention.

Throughout the description, similar reference numbers may be used to identify similar elements.

### DETAILED DESCRIPTION

It will be readily understood that the components of the embodiments as generally described herein and illustrated in the appended Figs. could be arranged and designed in a wide variety of different configurations. Thus, the following more detailed description of various embodiments, as represented in the Figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the embodiments is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

Although Number Theoretic Transforms (NTTs) come in various shapes and forms, the focus of embodiments of the invention is on the setting with polynomial rings, where the coefficients are in a finite field ${F}_{q}$ of prime order *q* and the polynomials are taken modulo *Xⁿ* +1 for some *n* such that 2*n* | *q* - 1 (i.e., 2*n* divides (*q* - 1)). That is, the embodiments work in the ring ${R}_{q} = {F}_{q} \left[X\right] / \left({X}^{n}+1\right)$*.* A completely analogous treatment can be done for the ring ${ℤ}_{q} \left[X\right] / \left({X}^{n}+1\right)$. Let *ζ* be a 2n-th primitive root of unity, which exists since 2*n* | *q* - 1 and ${F}_{q}^{∗}$ is a cyclic group of order *q* - 1. It follows that *ζ* is also a principal root of unity since the only square roots of 1 in ${F}_{q}$ are 1 and -1. It then follows that *Xⁿ* + 1 = (*X* - *ζ*)(*X - ζ*³) · · · (*X - ζ*^{2*n*-1}) and therefore that $NTT = {F}_{q} \left[X\right] / \left({X}^{n}+1\right) \to {\prod }_{i = 0}^{n - 1} {F}_{q} \left[X\right] / \left(X-{ζ}^{2 i + 1}\right)$ $ƒ ↦ \left(ƒ\left({ζ}^{1}\right),…,ƒ\left({ζ}^{2 i + 1}\right)\right)$ is an isomorphism by the Chinese Remainder Theorem (CRT). Clearly, the order of the product can change without repercussions, and this is often done to simplify implementation using bit reversals. The NTT transformation (i.e., *f* ↦ (*f*(*ζ*¹), ... , *f*(*ζ*²ⁱ⁺¹))) can be computed with exactly *n*/2 · log(*n*) Cooley-Tukey butterflies [2], and so can its inverse NTT⁻¹.

Similarly, one can use a primitive, and therefore principal, 2*k*-th root of unity *ζ₂ₖ* = *ζ*^{*n*/*k*} for some positive integer *k* | *n.* In that case, *Xⁿ* + 1 = (*X*^{*n*/*k*} - ${ζ}_{2 k} ) \left({X}^{n / k}-{ζ}_{2 k}^{3}\right) ⋯ \left({X}^{n / k}-{ζ}_{2 k}^{2 k - 1}\right)$ and by the CRT it follows that ${NTT}_{k} : {F}_{q} \left[X\right] / \left({X}^{n}+1\right) \to {\prod }_{i = 0}^{n - 1} {F}_{q} \left[X\right] / \left({X}^{\frac{n}{k}}-{ζ}_{2 k}^{2 i + k}\right)$ $ƒ ↦ \left(f mod \left({X}^{n / k}-{ζ}_{2 k}\right),…,f mod \left({X}^{n / k}-{ζ}_{2 k}^{2 k - 1}\right)\right) .$

This splits up the original polynomial of degree *n* into *k* polynomials of degree *n*/*k* each. This is a generalization of the case above. For *k* = *n*, the functions are equivalent. This and its inverse can be computed with butterfly algorithms with complexity *O*(*n* log(*k*)), which can be called "intermediate" or "early-abort" NTTs. These NTTs require only that 2*k* | *q* - 1 as opposed to 2*n* | *q* - 1, which is a weaker requirement on *q.*

By the convolution theorem, it is known that $ƒ ⋅ g = {NTT}_{k}^{- 1} \left({NTT}_{k}\left(f\right)⋅{NTT}_{k}\left(g\right)\right)$ for each such *k* and polynomials $f , g ∈ {F}_{q} \left[X\right] / \left({X}^{n}+1\right)$, and in particular that ${NTT}_{k}^{- 1} \left({NTT}_{k}\left(f\right)⋅{NTT}_{k}\left(g\right)\right) = {NTT}_{l}^{- 1} \left({NTT}_{l}\left(f\right)⋅{NTT}_{l}\left(g\right)\right)$ for each *l* | *n.* In other words, the choice of *k* has no impact on the result of polynomial multiplication.

The main arithmetic operations in ring-based lattice-based cryptography that determine their efficiency are polynomial multiplication and NTTs, which are typically performed on secret-key material. Protecting against side-channel attacks on such secret keys involves "masking", which linearly increases the cost of the multiplication or NTT with the number of shares. Suppose the goal is to perform a multiplication of polynomials *f* · *g*, where *f* is a publicly known value and g is secret. Then, for some positive integer *t*, *t* random masks *g₁*, . . . , *gₜ* are selected and *g*₀ = $g - {\sum }_{i = 1}^{t} {g}_{i}$ is set. The masked version of *g* is denoted by ***g*** = (*g₀*, ..., *gₜ*) and $ƒ ⋅ g = \left(ƒ⋅{g}_{0},…,ƒ⋅{g}_{t}\right) ,$ is computed using *t* + 1 polynomial multiplications. Similarly, NTT(*f*) ·NTT(***g***) is computed as $NTT \left(f\right) ⋅ NTT \left({g}_{0}\right) , … , NTT \left(f\right) ⋅ NTT \left({g}_{t}\right) ,$ by linearity of the NTT.

Methods for masking secret data in the form of polynomials in accordance with embodiments of the invention are now described. Let *n* be an integer, typically *n* = 256 (Kyber, Dilithium and Saber algorithms) or *n* = 509, 677, 821, 701 (NTRU algorithm). Here, the coefficients of polynomials all lie in ${ℤ}_{q}$, where *q* is either prime or a power of two. For example, *q* = 3329 (Kyber), *q* = 8380417 (Dilithium), *q* = 8192 (Saber) or *q* = 2048, 4096, 8192 (NTRU). In case *q* is prime, the above cases all satisfy the requirement that a power of 2 divides *q* - 1, enabling the use of NTTs where the roots of unity have power-of-two degrees. Although the methods according to embodiments of the invention described herein are most applicable to that scenario (as that is what post-quantum cryptography (PQC) algorithms typically use), these methods straightforwardly extend to more general NTTs with roots of unity of different degrees. When *q* is a power of two, the methods do not rely on NTTs, but rather perform polynomial multiplication directly. Polynomial rings with moduli *Xⁿ* - 1 and *Xⁿ* + 1 are considered, altogether treating four (4) distinct cases, but very similar ideas can also apply to any other modulus.

In general, let *g* be a (secret) polynomial for which the goal is to compute *f* · *g* for some known polynomial *f*. To mask g with a mask of order *t*, uniformly random *b*₁, . . . , *b*ₜ is chosen and ${b}_{0} = g - {\sum }_{i = 1}^{t} {b}_{i}$ is set, so that $f ⋅ g = {\sum }_{i = 0}^{t} f ⋅ {b}_{i}$. If *b*₁, . . . , *bₜ* are uniformly random, then so is *b*₀ and the masked computation comes at the cost of *t* additional full multiplications. Similarly, if NTTs are used, then $NTT \left(f\right) ⋅ NTT \left(g\right) = {\sum }_{i = 0}^{t} NTT \left(f\right) NTT \left({b}_{i}\right)$ is computed and *t* additional forward NTTs and basepoint multiplications are necessary, and naively also inverse NTTs, though they can often be aggregated. Since the computations are always equivalent for all *i*, as explained below, the notation is eased and the indices are dropped in the description below. However, *t* is still included in the complexity analysis.

An idea of the methods in accordance with embodiments of the invention is to reduce the cost of the additional multiplications *f* · *bᵢ*, or the cost of *NTT*(*bᵢ*), for *i* > 0, thereby reducing the cost of masking. To do so, the entropy of the masks *bᵢ* is lowered. That is, a trade-off is provided between the randomness of the mask and the complexity of the polynomial operation. This allows practitioners to select whichever is appropriate for their setting and improve the efficiency of their implementation.

For masking in ${ℤ}_{q} \left[X\right] / \left({X}^{n}+1\right)$, the modulus *Xⁿ* + 1 is first treated. Here a prime *q* applies to Kyber and Dilithium, and a power-of-two *q* applies to Saber. For a prime *q,* let *k* be an integer such that *k* | *n*, let *r*₀, · · · , *r*_{*k-*1} be uniformly random and let $b = {\sum }_{j = 0}^{k - 1} {B}_{j} , where {B}_{j} = {r}_{j} ⋅ {\sum }_{l = 0}^{\frac{n}{k} - 1} {X}^{\frac{jn}{k + l}} .$ For example, $\begin{matrix}k = 1 ⇒ b = {B}_{0} \\ = {r}_{0} \left(1+…+{X}^{n - 1}\right) ,\end{matrix}$ $\begin{matrix}k = 2 & ⇒ \begin{matrix}b = {B}_{0} + {B}_{1} \\ = {r}_{0} \left(1+⋯+{X}^{n / 2 - 1}\right) + {r}_{1} \left({X}^{n / 2}+⋯+{X}^{n - 1}\right) ,\end{matrix}\end{matrix}$ $\begin{matrix}k = 4 & ⇒ \begin{matrix}b = {B}_{0} + {B}_{1} + {B}_{2} + {B}_{3} \\ \begin{matrix}= {r}_{0} \left(1+⋯+{X}^{n / 4 - 1}\right) + {r}_{1} \left({X}^{n / 4}+⋯+{X}^{n / 2 - 1}\right) \\ + {r}_{2} \left({X}^{n / 2}+⋯+{X}^{3 n / 4 - 1}\right) \\ + {r}_{3} \left({X}^{3 n / 4}+⋯+{X}^{n - 1}\right) .\end{matrix}\end{matrix}\end{matrix}$

The choice of *k* determines the randomness in *b*, and also determines the number of unique random coefficients of *b.* For *k* = 1, all coefficients of *b* are equal, while *b* is a uniformly random polynomial for *k* = *n.* Now, since *k* | *n*, *NTT*(*b*) can be computed as the partial NTT of degree *k* (*k* layers) that maps $\begin{matrix}{NTT}_{k} : b ↦ \left[b mod \left({X}^{\frac{n}{k}}-{ζ}_{0}\right),…,b mod \left({X}^{\frac{n}{k}}-{ζ}_{k - 1}\right)\right] \\ = \left[{\sum }_{i = 0}^{k - 1} {r}_{i} {ζ}_{0}^{i} \left(1+⋯+{X}^{\frac{n}{k} - 1}\right),…,{\sum }_{i = 0}^{k - 1} {r}_{i} {ζ}_{k - 1}^{i} \left(1+⋯+{X}^{\frac{n}{k} - 1}\right)\right] ,\end{matrix}$ where *ζ*₀, . . . , *ζ*ₖ₋₁ are the *k* primitive roots of unity of order 2*k* in ${ℤ}_{q} ,$, followed by applying an *NTT*_{*n*/*k*} of *n*/*k* layers to each of the entries in the output array of *NTTₖ* Now, ${\sum }_{i = 0}^{k - 1} {r}_{i} {ζ}_{0}^{i} , … , {\sum }_{i = 0}^{k - 1} {r}_{i} {ζ}_{k - 1}^{i}$ are constants and can be taken outside of the application of NTT_{*n*/*k*} to each of the terms. But up to these constants, the terms in NTT*ₖ*(*b*) are equal and in fact constant (independent of randomness), and so can be completely pre-computed and stored as *n* elements of the base field ${ℤ}_{q}$.

To summarize, the steps to compute NTT(*b*) in accordance with embodiments of the invention are:
1. Generate *k* uniformly random elements *rᵢ*;
2. Compute ${s}_{j} = {\sum }_{i = 0}^{k - 1} {r}_{i} {ζ}_{j}^{i}$ for all *k* primitive 2*k*-th roots of unity *ζⱼ*;
3. Compute *sⱼ* **NTT**_{*n*/*k*}(1 + ... + *X*^{*n*/*k*-1}) for all *j* = 0, ... , *k* - 1, where **NTT**_{*n*/*k*}(1 + . . . + *X*^{*n*/*k*-1}) can be pre-computed and stored in some memory.

The cost of step 3 is simply *n* = *k·n*/*k* multiplications in ${ℤ}_{q}$. Interestingly, in step 2, the computation of *sⱼ* is again a small NTT with a polynomial whose coefficients are the random elements. This can be computed with complexity *k·*log *k* using butterflies. In particular, in case *k* = *n*, all multiplications are with 1, so step 3 is free. This case simply reduces to complexity *n·*log *n*, which is as expected for an NTT on a fully random polynomial. The total cost for *t* shares is *t·n* multiplications and *t·k*·log(*k*) butterflies.

Note that there is nothing special about the choice for *Bⱼ* = *rⱼ* · ${\sum }_{l = 0}^{n / k - 1} {X}^{jk + l}$; this can be further randomized by setting ${B}_{j} = {r}_{j} ⋅ {\sum }_{l = 0}^{n / k - 1} {β}_{l} {X}^{jk + l}$ for randomly chosen *β*₀, ..., *β*_{*n*/*k*-1}. This would leave the method unchanged except for step 3, where NTT_{*n*/*k*}(*β*₀ + *β*₁*X* +. . . + *β*_{*n*/*k-*1}*X*^{*n*/*k-*1}) is now pre-computed instead. As this is only part of the pre-computation phase, the efficiency is not affected. It is emphasized here that the *β*ᵢ are fixed throughout different executions of the method though. They do not provide additional randomness for each execution, but would rather serve to eliminate any unintentional structure in the computation of NTT_{*n*/*k*}.

For a power-of-two *q*, let *k* be an integer such that *k* | *n*, let *r*₀, · · · , *r*_{*k-*1} be uniformly random and let $b = {\sum }_{j = 0}^{k - 1} {B}_{j} , where {B}_{j} = {r}_{j} ⋅ {\sum }_{l = 0}^{\frac{n}{k} - 1} {X}^{j + kl} .$ Note that this is the same as above for the NTT *except for the choice of* Bⱼ*.* In this case, $\begin{matrix}k = 1 & ⇒ \begin{matrix}b = {B}_{0} \\ = {r}_{0} \left(1+…+{X}^{n - 1}\right) ,\end{matrix}\end{matrix}$ $\begin{matrix}k = 2 & ⇒ \begin{matrix}b = {B}_{0} + {B}_{1} \\ = {r}_{0} \left(1+{X}^{2}+⋯+{X}^{n / 2 - 1}\right) + {r}_{1} \left(X+⋯+{X}^{n - 1}\right) ,\end{matrix}\end{matrix}$ $\begin{matrix}k = 4 & ⇒ \begin{matrix}b = {B}_{0} + {B}_{1} + {B}_{2} + {B}_{3} \\ \begin{matrix}= {r}_{0} \left(1+⋯+{X}^{n - 4}\right) + {r}_{1} \left(X+⋯+{X}^{n - 3}\right) \\ + {r}_{2} \left({X}^{2}+⋯+{X}^{n - 2}\right) + {r}_{3} \left({X}^{3}+⋯+{X}^{n - 1}\right) ,\end{matrix}\end{matrix}\end{matrix}$ Again the choice of *k* determines the randomness in *b.* For *k* = 1, all coefficients of *b* are equal, while *b* is a uniformly random polynomial for *k* = *n.*

Writing *fᵢ* for the *i*-th coefficient of *f*, so $f = {\sum }_{i = 0}^{n - 1} {f}_{i} {x}^{i}$, and *h* = *f* · *b*, then ${h}_{l} = {\sum }_{i = 0}^{n - 1} \left({r}_{\left(l-i\right) mod k}⋅{f}_{i}\right) - 2 {\sum }_{i = l + 1}^{n - 1} \left({r}_{\left(l-i\right) mod k}⋅{f}_{i}\right) .$

This can be computed by summing up appropriate coefficients of *f* in sums of *k* terms (≈ *n* additions) for the first sum, and one additional subtraction for each of the *hₗ* (≈ *n* subtractions). This way it is most convenient to compute *h*_{*n-*1}*, h*_{*n-*2}, ... *h*₀ in that order. Finally, *n·k* distinct partial sums are left, each of which needs to be multiplied with one of the *rᵢ* and summed together. Hence, in total, the cost is approximately 2*n* + (*k* - 1)*n* = (*k* + 1)*n* additions/subtractions and *n·k* multiplications. Note that for *k* = *n*, the complexity is *n*², which is the same as simple schoolbook multiplication. For *t* shares, the cost is *t*(*k* + 1)*n* additions/subtractions and *t·n·k* multiplications.

For masking in ${ℤ}_{q} \left[X\right] / \left({X}^{n}-1\right)$ using a prime *q,* the algorithm in this case works exactly as for masking in ${ℤ}_{q} \left[X\right] / \left({X}^{n}+1\right)$ using a prime *q,* with the caveat *β*ᵢ = 1 should not be set for all *i* (as described above for masking in ${ℤ}_{q} \left[X\right] / \left({X}^{n}+1\right)$ using prime *q*). As the NTT in that case always evaluates to zero, the masks are canceled in the NTT computation. However, a random choice for the *β*ᵢ is still possible and has the exact same efficiency. Using *t* shares, the cost is *t*·*n* multiplications and *t*·*k* log(*k*) butterflies.

For a power-of-two *q*, let *k* be an integer such that *k* | *n*, let *r*₀, · · · , *r*_{*k-*1} be uniformly random and let $b = {\sum }_{j = 0}^{k - 1} {B}_{j} ,$ where ${B}_{j} = {r}_{j} ⋅ {\sum }_{l = 0}^{\frac{n}{k} - 1} {X}^{j + kl}$*.* Note that this is the same as in masking in ${ℤ}_{q} \left[X\right] / \left({X}^{n}+1\right)$ using a power-of-two *q.* Again the choice of *k* determines the randomness in *b.* For *k* = 1 all, coefficients of *b* are equal, while *b* is a uniformly random polynomial for *k* = *n.* The method is much simpler, however. Again writing *fᵢ* for the *i*-th coefficient of *f* and *h* = *f* · *b*, then ${h}_{l} = {\sum }_{i = 0}^{n - 1} \left({r}_{\left(l-i\right) mod k}⋅{f}_{i}\right) = {\sum }_{i = 0}^{k - 1} \left({r}_{\left(l-i\right) mod k}⋅{\sum }_{j = 0}^{\frac{n}{k} - 1} {f}_{jk + i}\right) .$

In this case, the coefficients can simply be summed up with ≈ *n* additions, while there are only *k*² distinct multiplications. For *t* shares, *t·n* additions and *t·k*² multiplications are therefore required.

The setting of operations *f · g* where *both f* and *g* are to be kept secret (i.e., two secret inputs) is now described. This is a less common scenario, but appears for example in NTRU decapsulation. In this case, masks *a*₁, . . . , *aₜ* for *f* and *b*₁, . . . , *bₜ* for *g* are selected, and *a*₀ = *f-a*₁*-*. . . *aₜ* and *b*₀ = *g* - *b*₁ - . . . *bₜ* are set. A different number of masks for *f* and *g* are also selected and the ideas below would apply analogously. The multiplication *f* · *g* requires multiplying *aᵢ* · *bⱼ* for all *i*, *j* = 0, . . . , *t* and consists of three cases:
1. *i*, *j* = 0. This is a generic multiplication or NTT.
2. *i* = 0, *j* ≠ 0 or *i ≠* 0, *j* = 0. This is the setting as described above, i.e., one of the inputs is a generic polynomial and the other a low-entropy mask.
3*. i*, *j* > 0. This is a new setting where both inputs to the NTT or polynomial multiplication are low-entropy masks.

The third case is now described, as the previous two have been described above. The simplest setting is where NTTs are used. In that case, NTT(*aᵢ*)NTT(*bⱼ*) is computed and the NTT is therefore applied to the low-entropy inputs separately. Then, the methods described above can be just applied directly.

The more involved setting is where a polynomial multiplication *aᵢ* · *bⱼ* is computed directly. As above, *a* = *aᵢ* and *b* = *bⱼ* are just written for ease of notation since the computation is independent of *i* and *j* (assuming they are non-zero). Similar to masking in ${ℤ}_{q} \left[X\right] / \left({X}^{n}+1\right)$ and ${ℤ}_{q} \left[X\right] / \left({X}^{n}-1\right)$ using a power-of-two *q*, *a* is chosen such that $a = {\sum }_{j = 0}^{k - 1} {A}_{j} ,$ where ${A}_{j} = {s}_{j} ⋅ {\sum }_{l = 0}^{\frac{n}{k} - 1} {X}^{j + kl}$, where *sⱼ* are randomly chosen elements of ${ℤ}_{q}$ for *j* = 0, . . . , *k* - 1. For modulo *Xⁿ* - 1, the product *a* · *b* can now be described with Equation 3, replacing the coefficients of *f* by those of *a.* But it immediately follows that ${\sum }_{j = 0}^{n / k - 1} {a}_{jk + i} = n / k ⋅ {s}_{i}$, replacing each *n*/*k* additions by a single multiplication with a constant, requiring a total of *k* multiplications. Thus, the total cost of *a·b* is *k*+*k*² multiplications per share. As *n*/*k* is typically a power of two, the *k* multiplications can even be implemented by simple bit shifts. For modulo *Xⁿ* + 1, the initial summing of all coefficients is also simplified because instead of *n* additions, *k* multiplications are required. Therefore, the total cost is *k·n* additions/subtractions and *n*·*k* multiplications per share.

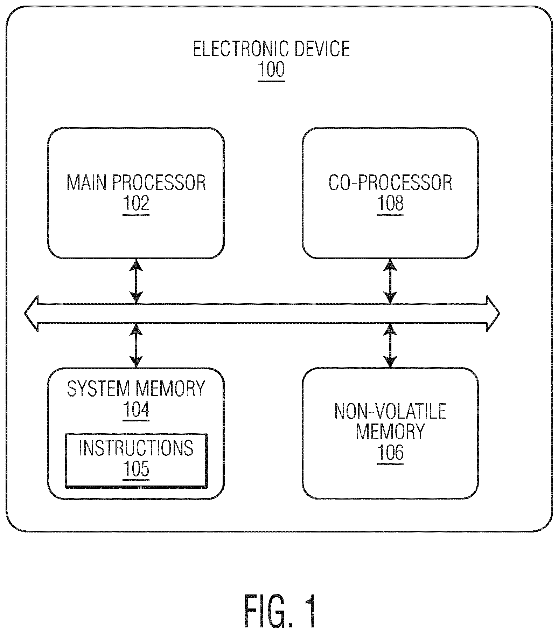

Turning now to Fig. 1, an electronic device 100 in which embodiments of the invention can be implemented is shown. The electronic device 100 includes a main processor (e.g., a central processing unit (CPU)) 102, system memory 104, non-volatile memory 106 and a coprocessor 108, which are all connected to a bus 110. The electronic device 100 may include other electronic components depending on the cryptographic operations executed in the device. As used herein, a cryptographic operation is any operation using cryptography. Thus, as an example, cryptographic operations include, but not limited to, generating secret keys and public keys, creating digital signatures, verifying digital signatures, encrypting digital messages and decrypting digital messages.

The main processor 102 can be any type of a processor, such as a CPU commonly found in a computer system. The system memory 104 is volatile memory used for retrieving codes, such as algorithms for executing methods in accordance with embodiments of the invention, from the non-volatile memory 106 and processing data. The system memory 104 may include, for example, one or more random access memory (RAM) modules. The system memory 104 can be used to store instructions 105 for executing methods in accordance with embodiments of the invention described herein. The non-volatile memory 106 can be any persistent memory, such as read-only memory (ROM). The non-volatile memory 106 may be used to store the codes and pre-calculated values, such as **NTT**_{*n*/*k*}(1 + . . . + *X*^{*n*/*k-*1})*.* The coprocessor 108 can be any type of a coprocessor, such as an arithmetic or integer coprocessor designed for classical public-key cryptography.

Operations for performing low-entropy masking in accordance with embodiments of the invention may be executed by the main processor 102 and/or the coprocessor 108. Thus, the main processor 102 and/or the coprocessor 108 may perform operations for low-entropy masking in ${ℤ}_{q} \left[X\right] / \left({X}^{n}+1\right)$ or ${ℤ}_{q} \left[X\right] / \left({X}^{n}-1\right)$ using a prime *q* or power-of-two *q* to compute *f* · *g*, where *f* is a publicly known polynomial and *g* is a secret polynomial.

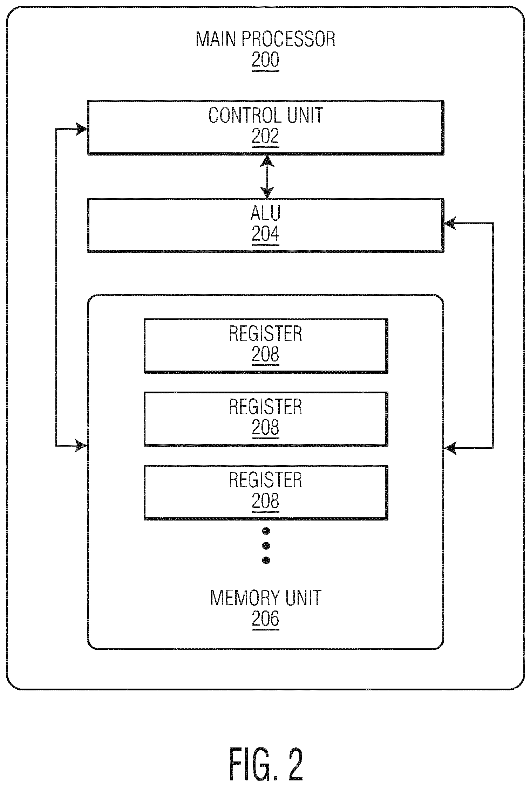

Turning now to Fig. 2, an example of a main processor 200, which can be a central processing unit (CPU), that may be used in the electronic device 100 is illustrated. As shown in Fig. 2, the main processor 200 includes a control unit 202, an arithmetic and logic unit (ALU) 204 and a memory unit 206, which has multiple registers 208. The control unit 202 operates to control and coordinate the overall functioning of the various components of the electronic device 100. The control unit controls the flow of data between the components during processing using stored instructions. The ALU 204 operates to perform all the necessary mathematical operations, such as additions, subtractions, multiplications and divisions. The ALU 204 also performs all the necessary logical operations, such as testing values to determine whether the values are true or false, as well as comparative analysis, such as less than, greater than and equal to or not analyses.

The memory unit 206 is used to store data before the data is processed and to store the results after the data has been processed. Thus, for example, if two sets of data are being multiplied, both data sets are placed in the registers 208 of the memory unit 206 and multiplied by the ALU 204, and then the results are stored in another register of the memory unit. The registers 208 are accessed using unique memory addresses.

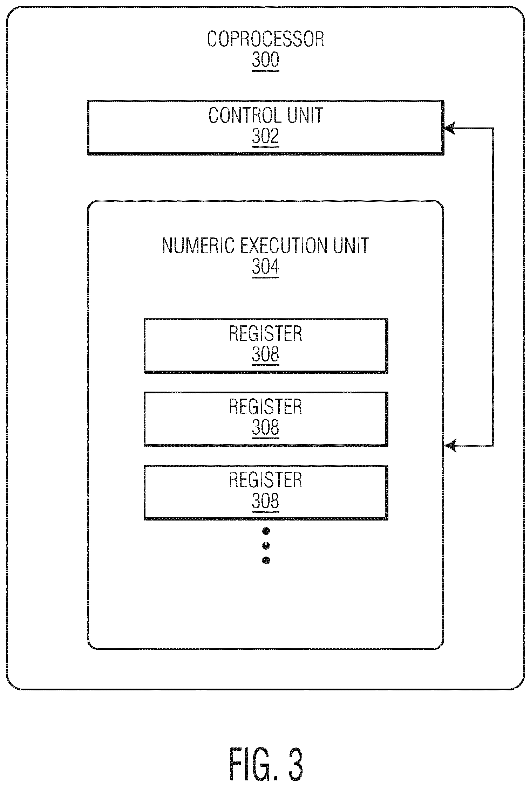

Turning now to Fig. 3, an example of a coprocessor 300 that may be used in the electronic device 100 is illustrated. As shown in Fig. 3, the coprocessor 300 includes a control unit 302 and a numeric execution unit 304, which has multiple registers 308 that are similar to the registers 208 of the main processor 200. The control unit 302 operates to synchronize the operation between the main processor, e.g., the main processor 200, and the coprocessor 300. The control unit 302 controls the instruction execution for which the numeric execution unit 304 is responsible. The numeric execution unit 304 operates to perform all operations that access and manipulate the numeric data in the registers 308. Thus, the numeric execution unit 304 can perform mathematical operations using the registers 308 similar to the ALU 204 of the main processor 200 using the registers 208. The registers 308 can be of any size. These registers 308 are accessed using unique memory addresses.

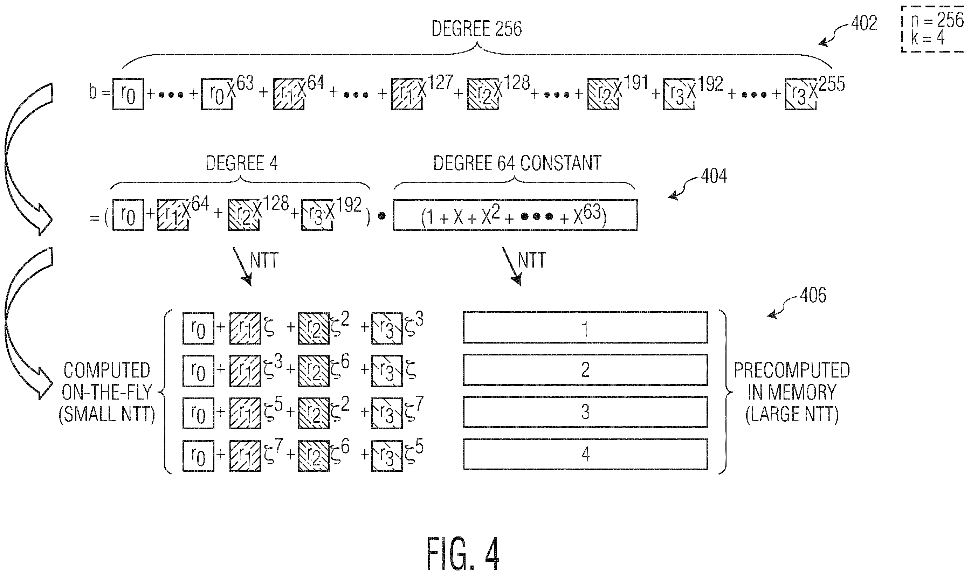

As noted above, operations for performing low-entropy masking in accordance with embodiments of the invention may be executed by a main processor, such as the main processor 200, and/or a coprocessor, such as the coprocessor 300. Thus, the main processor 200 and/or the coprocessor 300 can performed the steps of 1) generating *k* uniformly random elements *rᵢ*, 2) computing ${s}_{j} = {\sum }_{i = 0}^{k - 1} {r}_{i} {ζ}_{j}^{i}$ for all *k* primitive 2*k*-th roots of unity *ζⱼ*, and 3) computing *sⱼ* **NTT**_{*n*/*k*}(1 + . . . + *X*^{*n*/*k*-1}) for all *j* = 0, . . . , *k* - 1, where **NTT**_{*n*/*k*}(1 + . . . + *X*^{*n*/*k*-1}) can be pre-computed and stored in some memory. This is illustrated in Fig. 4 for *n*=256 and *k*=4.

As shown in Fig. 4, for the first step, k=4 random elements *rᵢ*, i.e., *r₀*, *r₁*, *r₂* and *r₃*, are generated for a polynomial b of degree 256, as illustrated in state 402. These random elements can be stored in the registers of the main processor 102 or the registers of the coprocessor 108, depending on whether the main processor or the coprocessor will be executing the low-entropy masking NTT operations. For the second step, ${s}_{j} = {\sum }_{i = 0}^{k - 1} {r}_{i} {ζ}_{j}^{i}$ for all *k* primitive *2k*-th roots of unity *ζⱼ* are computed, which results in a product of a constant polynomial of degree 64 and a polynomial of degree 4 with the random elements, as illustrated in state 404. These computations can be performed by the ALU of the main processor 102 or the numeric execution unit of the coprocessor 108. For the third step, *sⱼ* **NTT**_{*n*/*k*}(1 + . . . + *X*^{*n*/*k*-1}) for all *j* = 0, . . . , *k* - 1 are computed, as illustrated in state 406. These computations involve computing the NTT for the polynomial of degree 4 on-the-fly, which is smaller than the NTT for the constant polynomial of degree 64. The NTT for the constant polynomial of degree 64 can be precomputed and stored in memory, such as the non-volatile memory 106. Again, these computations can be performed by the ALU of the main processor 102 or the numeric execution unit of the coprocessor 108. The results of these computations can then be used for various applications, such as cryptography.

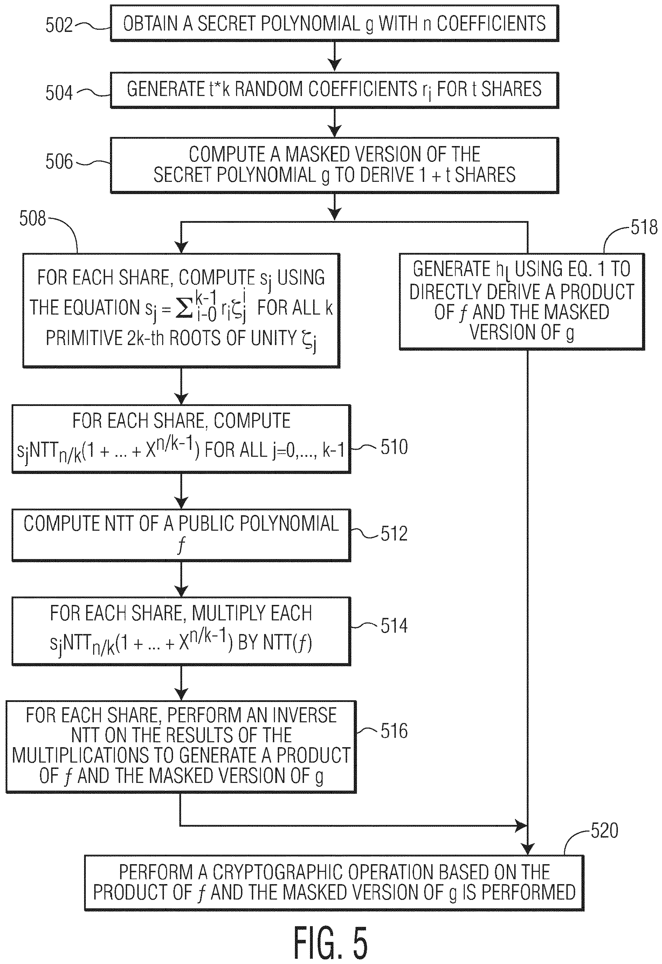

A process for low-entropy masking secret polynomials for cryptography in accordance with embodiments of the invention is now described with reference to a flow diagram of Fig. 5. The process begins at step 502, where a secret polynomial *g* with *n* coefficients is obtained by a processor of the electronic device 100. As used herein, the processor of the electronic device may be the main processor 102 or the coprocessor 108. In an embodiment, the secret polynomial *g* may be generated by the processor or received from an external source, which may be stored in the non-volatile memory 106. The coefficients of the secret polynomial may be in a data structure storing *n* values, where each value represents a corresponding integer coefficient of the secret polynomial.

Next, at step 504, *t***k* random coefficients *rᵢ* for *t* shares are generated by the processor, where *t* is a positive integer. These shares are multiple polynomials derived from the secret polynomial *g*. Next, at step 506, a masked version of the secret polynomial *g* is generated by the processor to derive *1*+*t* shares, i.e., the multiple polynomials. For masking in ${ℤ}_{q} \left[X\right] / \left({X}^{n}+1\right)$ or ${ℤ}_{q} \left[X\right] / \left({X}^{n}-1\right)$ using a prime *q*, Equation 1 is used to generate the *k* uniformly random elements *rᵢ* for each share. However, for masking in ${ℤ}_{q} \left[X\right] / \left({X}^{n}-1\right)$ using a prime *q*, *Bᵢ* should not be set to 1 for all *i.* For masking in ${ℤ}_{q} \left[X\right] / \left({X}^{n}+1\right)$ or ${ℤ}_{q} \left[X\right] / \left({X}^{n}-1\right)$ using a power-of-two *q,* Equation 2 is used to generate the *k* uniformly random elements *rᵢ* for each share.

When a prime *q* is used, steps 508-516 are performed to derive a product of a public polynomial *f* and the masked version of the secret polynomial g for each share. At step 508, for each share, *sⱼ* are computed by the processor using the equation ${s}_{j} = {\sum }_{i = 0}^{k - 1} {r}_{i} {ζ}_{j}^{i}$ for all *k* primitive 2*k*-th roots of unity *ζⱼ*. Next, at step 510, for each share, *sⱼ*NTT_{*n*/k}(1 + . . . + *X*^{*n*/*k-*1})*,* i.e., *sⱼ* multiplied by NTT_{*n*/*k*}(1 + . . . +*X*^{*n*/*k*-1}), for all *j* = 0, . . . , *k* - 1 are computed by the processor.

Next, at step 512, NTT of the public polynomial *f*, i.e., NTT(*f*), is computed. Next, at step 514, for each share, each *sⱼ*NTT_{*n*/*k*}(1 + . . . + *X*^{*n*/*k*-1}) is multiplied by NTT(*f*) by the processor. Next, at step 516, for each share, an inverse NTT is performed on the results of each NTT(*f*)*sⱼ*NTT_{*n*/*k*}(1 + . . . + *X*^{*n*/*k*-1}) multiplication to generate the product of *f* and the masked version of *g*. The process then proceeds to step 520.

When a power-of-two *q* is used, step 518 is performed to derive the product of the public polynomial *f* and the masked version of the secret polynomial *g*. At step 518, *hₗ* is computed by the processor of the electronic device 100 using Equation 3 to directly derive the product of *f* and the masked version of *g*. For masking in ${ℤ}_{q} \left[X\right] / \left({X}^{n}-1\right)$ using a power-of-two *q*, *hₗ* is computed using the simplified version of Equation 3 to directly derive a product of *f* and masked version of *g*. The process then proceeds to step 520.

At step 520, a cryptographic operation based on the product of *f* and the masked version of *g* is performed. The product of *f* and the masked version of *g* may be produced as a vector output having integer values. The cryptographic operation can be any operation using cryptography. As an example, the cryptographic operation may be a secret or public key generating operation, a digital signature creating or verifying operation, or an encryption or decryption of a digital message.

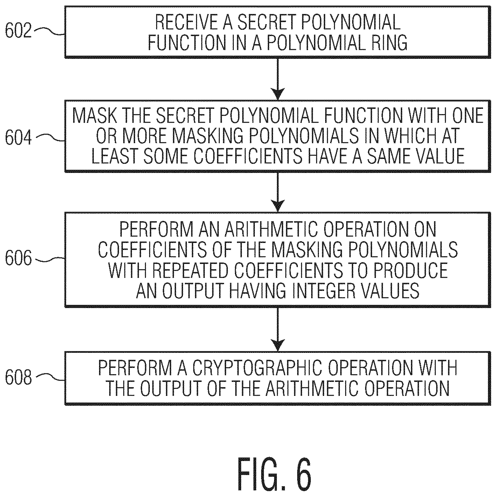

A computer-implemented method for masking secret polynomials for cryptography in accordance with an embodiment of the invention is described with reference to a process flow diagram of Fig. 6. At block 602, a secret polynomial function in a polynomial ring is received. At block 604, the secret polynomial function is masked with one or more masking polynomials in which at least some coefficients have a same value. At block 606, an arithmetic operation is performed on coefficients of the masking polynomials with repeated coefficients to produce an output having integer values. At block 608, a cryptographic operation is performed with the output of the arithmetic operation.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It can also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments that use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A computer-implemented method for masking secret polynomials for cryptography, the method comprising:
receiving a secret polynomial function in a polynomial ring;
masking the secret polynomial function with one or more masking polynomials in which at least some coefficients have a same value;
performing an arithmetic operation on coefficients of the masking polynomials with repeated coefficients to produce an output having integer values; and
performing a cryptographic operation with the output of the arithmetic operation.

2. The method of claim 1, wherein coefficients of a masked version of the secret polynomial function include *k* unique coefficients.

3. The method of claim 2, further comprising generating *k* uniformly random coefficients *rᵢ* for the masked version of the secret polynomial function for each of the masking polynomials, where *k* is a positive integer and less than *n.*

4. The method of claim 3, wherein performing the arithmetic operation includes executing a Number Theoretic Transform (NTT) on the masking polynomials with the repeated coefficients in registers of a processor.

5. The method of claim 4, further comprising computing ${s}_{j} = {\sum }_{i = 0}^{k - 1} {r}_{i} {ζ}_{j}^{i}$ for all *k* primitive 2*k*-th roots of unity *ζⱼ*.

6. The method of claim 5, wherein performing the arithmetic operation includes computing *sⱼ* **NTT**_{*n*/*k*}(1 + . . . + *X*^{*n*/*k-*1}) for all *j* = 0, . . . , *k* - 1.

7. The method of any of claims 2 to 6, wherein performing the arithmetic operation includes multiplying the masked version of the secret polynomial function and a second polynomial function.

8. The method of claim 7, wherein performing the arithmetic operation includes computing ${\sum }_{i = 0}^{n - 1} \left({r}_{\left(l-i\right) mod k}⋅{f}_{i}\right) - 2 {\sum }_{i = l + 1}^{n - 1} \left({r}_{\left(l-i\right) mod k}⋅{f}_{i}\right)$ to derive the product of the masked version of the secret polynomial function and the second polynomial function.

9. The method of any preceding claim, further comprising:
generating coefficients of a masked version of a second secret polynomial function such that at least some of the coefficients of the masked version of the second secret polynomial function have a same value.

10. The method of any preceding claim, wherein the secret polynomial function is $f = {\sum }_{i = 0}^{n} {f}_{i} {X}^{i}$ in a ring *R_{q}* = *F_{q}*[*X*]/(*Xⁿ* + 1) or in a ring *R_{q}* = *F_{q}*[*X*]/(*Xⁿ* - 1).

11. A non-transitory computer-readable storage medium containing program instructions for masking secret polynomials for cryptography, wherein execution of the program instructions by one or more processors of a computer causes the one or more processors to perform steps comprising:
receiving a secret polynomial function in a polynomial ring;
masking the secret polynomial function with one or more masking polynomials in which at least some coefficients have a same value;
performing an arithmetic operation on coefficients of the masking polynomials with repeated coefficients to produce an output having integer values; and
performing a cryptographic operation with the output of the arithmetic operation.

12. The non-transitory computer-readable storage medium of claim 11, wherein coefficients of a masked version of the secret polynomial function include *k* unique coefficients.

13. The non-transitory computer-readable storage medium of claim 12, wherein steps further comprise generating *k* uniformly random coefficients *rᵢ* for the masked version of the secret polynomial function for each of the masking polynomials, where *k* is a positive integer and less than *n.*

14. The non-transitory computer-readable storage medium of claim 13, wherein performing the arithmetic operation includes executing a Number Theoretic Transform (NTT) on the masking polynomials with the repeated coefficients in registers of a processor.

15. The non-transitory computer-readable storage medium of an of claims 12 to 14, wherein performing the arithmetic operation includes multiplying the masked version of the secret polynomial function and a second polynomial function.
